(19) Europäisches Patentamt
European Patent Office
Office européen des brevets

(11) **EP 1 174 977 B1**

(12) **EUROPEAN PATENT SPECIFICATION**

(45) Date of publication and mention
of the grant of the patent:
**26.10.2011 Bulletin 2011/43**

(51) Int Cl.:
*H02J 7/00* *(2006.01)*     *H01M 10/44* *(2006.01)*

(21) Application number: **01116134.6**

(22) Date of filing: **03.07.2001**

(54) **Method and device for charging secondary battery**

Verfahren und Einrichtung zur Akkumulatorladung

Procédé et dispositif pour charger un accumulateur

(84) Designated Contracting States:
**DE ES FR IT NL**

(30) Priority: **21.07.2000   JP 2000220714**

(43) Date of publication of application:
**23.01.2002   Bulletin 2002/04**

(73) Proprietor: **HONDA GIKEN KOGYO KABUSHIKI KAISHA**
**Minato-ku, Tokyo (JP)**

(72) Inventors:
• **Ariga, Kyoichi**
**Wako-shi,**
**Saitama (JP)**

• **Suzuki, Hiroyuki**
**Wako-shi,**
**Saitama (JP)**

(74) Representative: **Liska, Horst et al**
**Weickmann & Weickmann**
**Patentanwälte**
**Postfach 86 08 20**
**81635 München (DE)**

(56) References cited:
**EP-A- 0 354 966     US-A- 4 503 378**
**US-A- 5 541 496     US-A- 5 612 607**

• **PATENT ABSTRACTS OF JAPAN vol. 2000, no. 07, 29 September 2000 (2000-09-29) & JP 2000 116021 A (MATSUSHITA ELECTRIC IND CO LTD), 21 April 2000 (2000-04-21)**

**Description**

The present invention relates to a method and device for charging a secondary battery and, more particularly, to a charging method and device adopting a nickel oxide as an electrode material for an anode and suited for charging the secondary battery.

A secondary battery charging device according to the preamble of claim 1 is known from US-A-4 503 378.

In the charging device of the prior art, as disclosed in Japanese Patent Laid-Open No. Hei6-315233, in order to compensate the defects of a charge end decision based on the changing rate of a terminal voltage and a charge end decision based on the changing rate of a battery temperature thereby to prevent a drop in the battery lifetime and an erroneous decision of the charge end, as might otherwise be caused by an overcharge, the full charge (of 100 %) has been decided by using both the changing rate of the terminal voltage of the battery and the changing rate of the temperature as parameters.

When the charge of the battery is completed in a fully charged state, a nickel-cadmium cell or a nickel-hydrogen cell adopting a nickel oxide as an electrode material for the anode can be suppressed from such a rise in its internal pressure as might otherwise be caused by an oxygen gas to be emitted from the anode just before the full charge. It is, therefore, unnecessary to consume the oxygen gas on the cathode surface by the local cell reaction. It is accordingly unnecessary to adopt the so-called "charge reserve", in which the capacity of the cathode is made larger than that of the anode, so that the battery can be small-sized.

The aforementioned prior art (i.e., Japanese Patent Laid-Open No. Hei6-315233) has to monitor not only the terminal voltage of the battery but also the battery temperature and is therefore troubled by a problem that the charging device is complicated and large-sized. Even if the changing rate of the battery temperature is added to the parameters for deciding the charge end based on the changing rate of the terminal voltage, moreover, there is another problem that a precise decision of the charge end is still difficult.

An object of the invention is to provide a secondary battery charging method and device adopting a nickel oxide as an electrode material of an anode, by which the charge end can be precisely decided and the emission of an oxygen gas from the anode can be suppressed.

This object is achieved by a secondary battery charging device having the features of claim 1 and a secondary battery charging method having the features of claim 8.

There is provided a secondary battery charging device adopting a nickel oxide as an electrode material for an anode, comprising: charging voltage detecting means for detecting the terminal voltage of a secondary battery being charged; quadratic changing rate detecting means for detecting the change in the changing rate of said terminal voltage; and charge ending means for ending the charge when the change in said changing rate is lower than a predetermined reference changing rate.

The changing rate of the changing rate of the charging voltage of the battery, i.e., the quadratic changing rate represents the amount of charge of the battery. Especially just before the full charge at the second half of the charge, the changing rate of the charging voltage turns its rising rate from positive to negative. If the charge is ended when the quadratic changing rate of the charging voltage lowers to the predetermined reference changing rate, therefore, the charge can be ended before the emission of oxygen from the anode becomes vigorous, merely by monitoring the terminal voltage of the battery. In other words, the charge end of the secondary battery can be precisely decided with the simple construction. As a result, the secondary battery can be reduced in the cathode capacity so that the battery can be small-sized.

According to the present invention, there are achieved the following effects.

(1) According to the invention, the charge can be ended before the emission of oxygen from the anode becomes vigorous, merely by monitoring the terminal voltage of the battery. In short, the charge end can be precisely decided with the simple construction.

(2) According to the invention, the charge of the secondary battery can be precisely ended just before the full charge so that the oxygen emission from the anode can be eliminated to prevent the degradation of the cathode.

(3) According to the invention, the degradation of the cathode can be prevented to make the cathode capacity of the battery smaller than that of the prior art so that the anode capacity can be accordingly increased. It is, therefore, possible to make the charging capacity itself of the battery bigger than that of the prior art or to achieve a charging capacity equivalent to that of the prior art with a smaller battery than that of the prior art.

(4) According to the invention, the charge end can be decided only on the basis of the terminal voltage of the battery thereby to simplify the charging circuit and to reduce the size and weight of the same.

The present invention will be described in detail with reference to the accompanying drawings.

It is illustrated in:

Fig. 1

A block diagram showing a charging device according to one embodiment of the present invention.

Fig. 2

A diagram for explaining a mechanism for deciding a charge end in the invention.

Fig. 3

A flow chart showing the actions of the embodiment of the invention.

Fig. 4

A diagram showing such a relation between the anode capacity and the cathode capacity of a secondary battery as is suited for the charging device of the invention.

Fig. 5

A diagram showing a relation between the anode capacity and the cathode capacity of a secondary battery of the prior art.

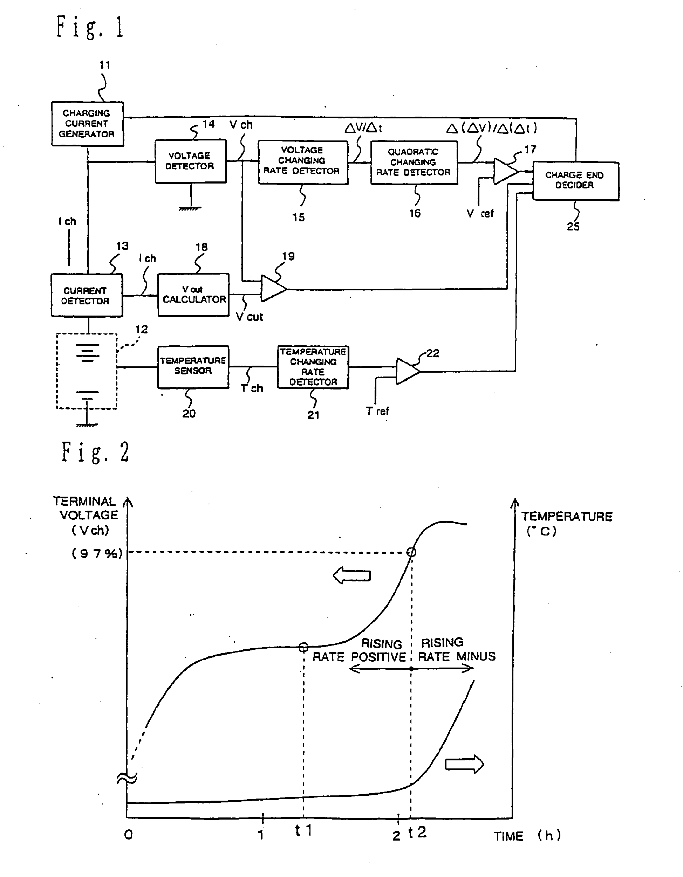

Fig. 1 is a block diagram showing a charging device according to one embodiment of the invention, and Fig. 2 is a diagram for explaining a mechanism for deciding a charge end in the invention.

According to our experimental results, the emission of an oxygen gas from the anode is especially activated just before the full charge (i.e., at about 97% of the fully charged state) in the second half of the charge, so that the changing rate $\Delta V/\Delta t$ of a charging voltage Vch turns its rising rate negative from a positive one, as illustrated in Fig. 2. If this transition point (or time t2) can be detected, therefore, the charge can be interrupted just before the full charge, and the emission of oxygen from the anode can be suppressed while retaining the charge of about 97% of the full charge.

In the embodiment, therefore, noting the changing rate of the changing rate $\Delta V/\Delta t$ of the charging voltage Vch, that is, the quadratic changing rate $\Delta(\Delta V)/\Delta(\Delta t)$, the charge is ended when the quadratic changing rate $\Delta(\Delta V)/\Delta(\Delta t)$ becomes substantially zero. Depending upon the temperature or degradation of the battery, however, the quadratic changing rate $\Delta(\Delta V)/\Delta(\Delta t)$ can be substantially zero, as illustrated in Fig. 2, even just before the intrinsic transition point (or time t1). In the embodiment, therefore, the temperature and the degradation of the battery are also employed as the parameters for deciding the charge end so that only the transition point just before the full charge may be detected without fail.

In Fig. 1, a charging current generator 11 outputs a charging current Ich for charging a secondary battery 12. A voltage detector 14 detects the charging voltage Vch. A voltage changing rate detector 15 detects the time changing rate $\Delta V/\Delta t$ of the charging voltage Vch. A quadratic changing rate detector 16 detects the time quadratic changing rate $\Delta(\Delta V)/\Delta(\Delta t)$ of the aforementioned time changing rate $\Delta V/\Delta t$. A comparator 17 compares the aforementioned quadratic changing rate $\Delta(\Delta V)/\Delta(\Delta t)$ and a reference value Vref, and outputs the comparison result to a charge end decider 25.

The aforementioned reference value Vref is preset to a quadratic changing rate, at which the charge of the secondary battery 12 corresponds to about 97 % of the full charge, and can be exemplified by "0" or a value corresponding to "0".

A temperature sensor 20 detects the temperature Tch of the secondary battery 12. A temperature changing rate detector 21 detects the time changing rate $\Delta T/\Delta t$ of the battery temperature Tch. A comparator 22 compares the aforementioned temperature changing rate $\Delta T/\Delta t$ and the reference value Tref, and outputs the comparison result to the charge end decider 25. The battery temperature Tch rises abruptly just before the full charge, as illustrated in Fig. 2. In the embodiment, therefore, the aforementioned reference value Tref is set to 0.2 °C/sec., and it is decided that the state is just before the full charge, when the temperature changing rate $\Delta T/\Delta t$ exceeds the reference value Tref.

A current detector 13 detects the aforementioned charging current Ich. A Vcut calculator 18 calculates a terminal voltage (i.e., a second half charging voltage) Vcut corresponding to 90 to 95 % of the theoretical full charge state further before (97 %) of the full charge of the battery, on the basis of the following Formula (1). Here, a coefficient $\alpha$ indicates the internal resistance coefficient of the secondary battery and ranges within 0.001 to 0.01. A coefficient $\beta$ indicates a temperature coefficient relating to the internal resistance of the secondary battery and ranges within 0.01 to 0.1. A coefficient $\gamma$ indicates a degradation coefficient relating to the internal resistance of the secondary battery and ranges within 0 to 0.2.

$$Vcut = 1.4 + (Ich - 1.6)\alpha + (25 - Tch)\beta + \gamma$$

$$- - - - - - - - - - - (1).$$

A comparator 19 compares the aforementioned second half charging voltage Vcut and the present charging voltage Vch, and outputs the comparison result to the charge end decider 25.

The charge end decider 25 decides the continuation or end of the charge on the basis of the individual comparison results of the aforementioned comparators 17, 19 and 22, and instructs the aforementioned charging current generator 11 the charge end when the charge is to be ended.

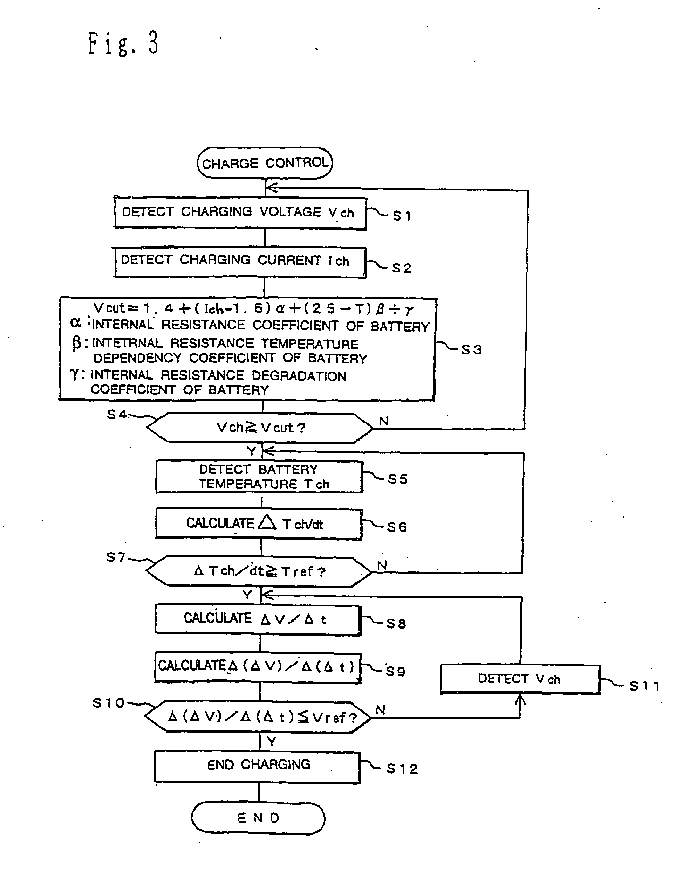

Here will be described the actions of the aforementioned first embodiment with reference to the flow chart of Fig. 3. When the charge is started, the terminal voltage of the secondary battery is detected at Step S1 as the charging voltage Vch by the aforementioned voltage detector 14. At Step S2, the charging current Ich is detected by the aforementioned current detector 13.

At Step S3, the second half charging voltage Vcut is calculated at the aforementioned Vcut calculator on the basis of the aforementioned Formula (1). At Step S4, the aforementioned charging voltage Vch and the second half charging voltage Vcut are compared at the comparator 19. If the charging voltage Vch exceeds the second half charging voltage Vcut, the routine advances to Step S5 to decide the charge end.

At Step S5, the surface temperature Tch of the secondary battery 12 is detected by the aforementioned temperature sensor 20. At Step S6, the changing rate $\Delta T/\Delta t$ of the battery temperature Tch is calculated at the aforementioned temperature changing rate detector 21 on the basis of the present battery temperature Tch and the preceding battery temperature. At Step S7, the temperature changing rate $\Delta T/\Delta t$ is compared at the comparator 22 with the reference value Tref. If the temperature changing rate $\Delta T/\Delta t$ exceeds the reference value Tref, the routine advances to Step S8 to decide the charge end.

At Step S8, the changing rate $\Delta V/\Delta t$ of the charging voltage Vch is calculated at the aforementioned changing rate detector 15 on the basis of the present charging voltage Vch and the preceding charging voltage. At Step S9, the changing rate $\Delta(\Delta V)/\Delta(\Delta t)$ of the aforementioned changing rate $\Delta V/\Delta t$ is calculated at the quadratic changing rate detector 16. At Step S10, the quadratic changing rate $\Delta(\Delta V)/\Delta(\Delta t)$ of the charging voltage and the reference value Vref are compared at the comparator 17.

If the quadratic changing rate $\Delta(\Delta V)/\Delta(\Delta t)$ is larger than reference value Vref, it is decided that the state is not just before the full charge yet, and the routine advances to Step S11. At Step S11, the charging voltage Vch is detected again, and the routine of Steps S8 to S10 is repeated. If the quadratic changing rate $\Delta(\Delta V)/\Delta(\Delta t)$ is smaller than or equal to the reference value Vref, on the contrary, it is decided that the state is just before the full charge, and the routine advances to Step S12. At Step S12, the charge end decider 25 decides the charge ending timing and instructs the aforementioned charging current generator 11 the termination of charge.

According to the embodiment, the charge of the secondary battery can be precisely ended just before the full charge so that the emission of oxygen from the anode can be suppressed to prevent the degradation of the cathode.

When the charge is ended just before the fully charged state as in the embodiment, the amount of charge is less than that of the case in which the full charge is made as in the prior art while allowing an overcharge. In the embodiment, however, the charge can be ended before the oxygen emission from the anode becomes vigorous, so that any charging reservation for compensating the gradual reduction in the cathode capacity need not be retained. Therefore, the additional ratio of the cathode capacity to the anode capacity can be made smaller than that of the prior art so that the charging capacity itself of the battery can be made more than that of the prior art.

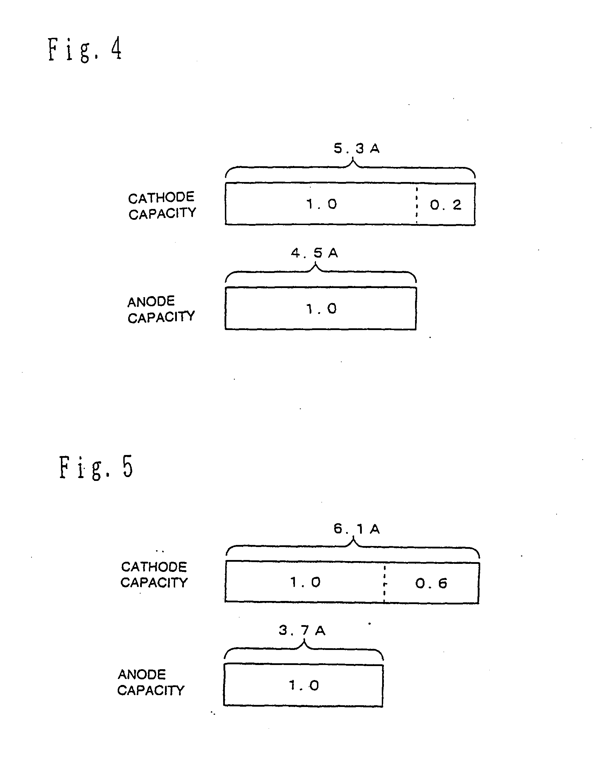

Figs. 4 and 5 are diagrams showing such relations between the anode capacity and the cathode capacity of the secondary battery as are suited for the individual charging devices of the embodiment and the prior art.

The prior art has found it difficult to decide the charge end precisely and it liable to have a larger degree of overcharge. As illustrated in Fig. 5, therefore, the theoretical capacity of the cathode has been set to a value corresponding to 1.6 times as large as that of the anode capacity while estimating the increase/decrease in the capacity due to the local cell reaction.

However, the charging capacity of the battery is determined in its rate by the anode. Even if the cathode capacity is exclusively increased, therefore, the result is that the battery is only large-sized without any increase in the charging capacity. As illustrated in Fig. 5, more specifically, the cathode capacity is about 6.1 A, but the charging capacity of the battery is just 3.7 A, as corresponding to the anode capacity. In the prior art, therefore, the battery can be charged up to the fully charged state, but the charging capacity obtained is lower than the total capacity of the anode and the cathode.

According to the embodiment, on the contrary, the oxygen emission from the anode can be suppressed to reduce the gradual decrease of the cathode capacity. Therefore, the cathode capacity may be about 1.2 times as large as the value 1.0 of the anode capacity, so that the increase of the cathode capacity to the anode capacity can be made smaller. Where the total capacity of the anode and the cathode is 9.7 A as in Fig. 5, the anode capacity can be increased up to 4.5 A in the embodiment so that a larger charging capacity than that of the prior art can be retained even the charge is ended before the full charge (about 97 % of the full charge). In another aspect, according to the embodiment, a charging capacity equivalent to that of the prior art can be obtained from a smaller battery than that of the prior art so that the battery can be small-sized.

Here has been described the foregoing embodiment in which the charge is ended on condition that the quadratic changing rate of the charging voltage Vch is lower than the reference value Vref, when the changing rate $\Delta T/\Delta t$ of the battery temperature Tch exceeds the reference value Tref and when the charging voltage Vch exceeds the second half charging voltage Vcut. However, the charge may be ended only on condition that the quadratic changing rate of the charging voltage Vch is lower than the reference value Vref.

## Claims

1. A secondary battery charging device adopting a nickel oxide as an electrode material for an anode, comprising:

   charging current detecting means (13) for detecting a charging current (Ich) for charging a secondary battery (12), charging voltage detecting means (14) for detecting a terminal voltage (Vch) of the secondary battery (12) being charged,
   quadratic changing rate detecting means (16) for detecting the change ($\Delta(\Delta V)/\Delta(\Delta t)$) in the changing rate ($\Delta V/\Delta t$) of said terminal voltage (Vch),
   and
   charge ending means (25) for ending the charge when predetermined conditions are satisfied,
   **characterized in that**
   the secondary battery charging device further comprises:
   second half charging voltage calculating means (18) for calculating a second half charging voltage (Vcut), which is a terminal voltage closed to a theoretical full charge state of the battery (12), based on the charging current (Ich) and coefficients pertaining at least to a degradation state and a temperature (Tch) of said battery (12), and
   a comparator (19) for comparing the second half charging voltage (Vcut) and the terminal voltage (Vch) and outputting the comparison result to said charge ending means (25),
   wherein said charge ending means (25) ends the charge when the terminal voltage (Vch) of the secondary battery (12) being charged is higher than or equal to said second half charging voltage (Vcut) and the change ($\Delta(\Delta V)/\Delta(\Delta t)$) in the changing rate ($\Delta V/\Delta t$) of said terminal voltage (Vch) is lower than or equal to a predetermined reference changing rate (Vref).

2. A secondary battery charging device as set forth in Claim 1, further comprising a temperature sensor (20) for detecting the temperature (Tch) of the secondary battery (12) being charged,
   wherein said charge ending means (25) ends the charge when said detected battery temperature (Tch) is higher than a predetermined reference temperature (Tref).

3. A secondary battery charging device as set forth in Claim 1, further comprising a temperature sensor (20) for detecting the temperature (Tch) of the secondary battery (12) being charged, and temperature changing rate detecting means (21) for detecting the changing rate ($\Delta T/\Delta t$) of said detected battery temperature (Tch),
   wherein said charge ending means (25) ends the charge when the changing rate ($\Delta T/\Delta t$) of said detected battery temperature (Tch) is higher than or equal to a predetermined reference changing rate (Tref).

4. A secondary battery charging device as set forth in any of Claims 1 to 3,
   wherein said predetermined reference changing rate (Vref) is substantially zero.

5. A secondary battery charging device as set forth in any of Claims 1 to 3,
   wherein said predetermined reference changing rate (Vref) is a value just before the emission of oxygen from the anode of the secondary battery (12) becomes vigorous.

6. A secondary battery charging device as set forth in any of Claims 1 to 3,
   wherein said predetermined reference changing rate (Vref) is a value at the time when the charge of the secondary battery (12) corresponds to about 97 % of the full charge.

**7.** A secondary battery charging device as set forth in any of Claims 1 to 6,
wherein the ratio of the theoretical capacity of the anode of said secondary battery (12) to that of the cathode is about 1 : 1.2.

**8.** A secondary battery charging method adopting a nickel oxide as an electrode material for an anode, wherein a terminal voltage (Vch), a charging current (Ich) and a temperature (Tch) of a secondary battery (12) being charged are monitored and the charge is ended when the changing rate ($\Delta(\Delta V)/\Delta(\Delta t)$) of the changing rate ($\Delta V/\Delta t$) of the terminal voltage (Vch) is lower than or equal to a predetermined reference changing rate (Vref) and the terminal voltage (Vch) is higher than or equal to a second half charging voltage (Vcut) which is a terminal voltage closed to a theoretical full charge state of the battery (12) and calculated based on the charging current (Ich) and coefficients pertaining at least to a degradation state and a temperature (Tch) of said battery (12).

**Patentansprüche**

**1.** Sekundärbatterie-Ladeeinrichtung, welche ein Nickeloxid als ein Elektrodenmaterial für eine Anode verwendet, umfassend:

ein Ladestromerfassungsmittel (13) zur Erfassung eines Ladestroms (Ich) zum Laden einer Sekundärbatterie (12),
ein Ladespannungserfassungsmittel (14) zur Erfassung einer Klemmenspannung (Vch) von der Sekundärbatterie (12), welche geladen wird,
ein Quadratische-Änderungsrate-Erfassungsmittel (16) zur Erfassung der Änderung ($\Delta(\Delta V)/\Delta(\Delta t)$) in der Änderungsrate ($\Delta V/\Delta t$)) von der Klemmenspannung (Vch), und
ein Ladebeendigungsmittel (25) zum Beenden des Ladens, wenn vorbestimmte Bedingungen erfüllt sind,
**dadurch gekennzeichnet,**
**dass** die Sekundärbatterie-Ladeeinrichtung ferner umfasst:
ein Zweite-Hälfte-Ladespannung-Berechnungsmittel (18) zum Berechnen einer Zweite-Hälfte-Ladespannung (Vcut), welche eine Klemmenspannung nahe einem theoretisch voll geladenen Zustand der Batterie (12) ist, basierend auf dem Ladestrom (Ich) und Koeffizienten, welche sich wenigstens auf einen Verschlechterungszustand und eine Temperatur (Tch) von der Batterie (12) beziehen, und
eine Vergleichseinrichtung (19) zum Vergleichen der Zweite-Hälfte-Ladespannung (Vcut) und der Klemmenspannung (Vch) und zur Ausgabe des Vergleichsergebnisses an das Ladebeendigungsmittel (25),
wobei das Ladebeendigungsmittel (25) das Laden beendet, wenn die Klemmenspannung (Vch) von der Sekundärbatterie (12), welche geladen wird, größer oder gleich der Zweite-Hälfte-Ladespannung (Vcut) ist und die Änderung ($\Delta(\Delta V)/\Delta(\Delta t)$) in der Änderungsrate ($\Delta V/\Delta t$) von der Klemmenspannung (Vch) kleiner oder gleich einer vorbestimmten Referenzänderungsrate (Vref) ist.

**2.** Sekundärbatterie-Ladeeinrichtung nach Anspruch 1, ferner umfassend einen Temperatursensor (20) zur Erfassung der Temperatur (Tch) von der Sekundärbatterie (12), welche geladen wird, wobei das Ladebeendigungsmittel (25) das Laden beendet, wenn die erfasste Batterietemperatur (Tch) höher als eine vorbestimmte Referenztemperatur (Tref) ist.

**3.** Sekundärbatterie-Ladeeinrichtung nach Anspruch 1, ferner umfassend einen Temperatursensor (20) zur Erfassung der Temperatur (Tch) von der Sekundärbatterie (12), welche geladen wird, und ein Temperaturänderungsrate-Erfassungsmittel (21) zur Erfassung der Änderungsrate ($\Delta T/\Delta t$) von der erfassten Batterietemperatur (Tch),
wobei das Ladebeendigungsmittel (25) das Laden beendet, wenn die Änderungsrate ($\Delta T/\Delta t$) von der erfassten Batterietemperatur (Tch) größer oder gleich einer vorbestimmten Referenzänderungsrate (Tref) ist.

**4.** Sekundärbatterie-Ladeeinrichtung nach einem der Ansprüche 1 bis 3,
wobei die vorbestimmte Referenzänderungsrate (Vref) im Wesentlichen Null ist.

**5.** Sekundärbatterie-Ladeeinrichtung nach einem der Ansprüche 1 bis 3,
wobei die vorbestimmte Referenzänderungsrate (Vref) ein Wert ist, kurz bevor die Emission von Sauerstoff von der Anode von der Sekundärbatterie (12) stark wird.

**6.** Sekundärbatterie-Ladeeinrichtung nach einem der Ansprüche 1 bis 3,
wobei die vorbestimmte Referenzänderungsrate (Vref) ein Wert zu dem Zeitpunkt ist, wenn die Ladung der Sekundärbatterie (12) etwa 97 % der vollen Ladung entspricht.

7. Sekundärbatterie-Ladeeinrichtung nach einem der Ansprüche 1 bis 6, wobei das Verhältnis von der theoretischen Kapazität von der Anode von der Sekundärbatterie (12) zu der von der Kathode etwa 1 : 1,2 beträgt.

8. Sekundärbatterie-Ladeverfahren, welches ein Nickeloxid als ein Elektrodenmaterial für eine Anode verwendet, wobei eine Klemmenspannung (Vch), ein Ladestrom (Ich) und eine Temperatur (Tch) von einer Sekundärbatterie (12), welche geladen wird, überwacht werden und das Laden beendet wird, wenn die Änderungsrate ($\Delta(\Delta V)/\Delta(\Delta t)$) von der Änderungsrate ($\Delta V/\Delta t$) von der Klemmenspannung (Vch) kleiner oder gleich einer vorbestimmten Referenzänderungsrate (Vref) ist und die Klemmenspannung (Vch) größer oder gleich einer Zweite-Hälfte-Ladespannung (Vcut) ist, welche eine Klemmenspannung nahe einem theoretisch voll geladenen Zustand von der Batterie (12) ist, und basierend auf dem Ladestrom (Ich) und Koeffizienten berechnet wird, welche sich wenigstens auf einen Verschlechterungszustand und eine Temperatur (Tch) der Batterie (12) beziehen.

## Revendications

1. Dispositif de charge de batterie secondaire adoptant un oxyde de nickel comme matériau d'électrode pour une anode, comprenant :

   un moyen de détection de courant de charge (13) pour détecter un courant de charge (Ich) pour charger une batterie secondaire (12),
   un moyen de détection de tension de charge (14) pour détecter une tension de borne (Vch) de la batterie secondaire (12) en cours de charge,
   un moyen de détection de taux de changement quadratique (16) pour détecter le changement ($\Delta(\Delta V)/\Delta(\Delta t)$) du taux de changement ($\Delta V/\Delta t$) de ladite tension de borne (Vch), et
   un moyen de fin de charge (25) pour terminer la charge lorsque des conditions prédéterminées sont remplies, **caractérisé en ce que**
   le dispositif de charge de batterie secondaire comprend en outre :
   un moyen de calcul de tension de charge de deuxième moitié (18) pour calculer une tension de charge de deuxième moitié (Vcut), qui est une tension de borne proche d'un état de pleine charge théorique de la batterie (12), sur la base du courant de charge (Ich) et de coefficients concernant au moins un état de dégradation et une température (Tch) de ladite batterie (12), et
   un comparateur (19) pour comparer la tension de charge de deuxième moitié (Vcut) et la tension de borne (Vch) et pour délivrer le résultat de comparaison au dit moyen de fin de charge (25),
   dans lequel ledit moyen de fin de charge (25) termine la charge lorsque la tension de borne (Vch) de la batterie secondaire (12) en cours de charge est supérieure ou égale à la tension de charge de deuxième moitié (Vcut) et le changement ($\Delta(\Delta V)/\Delta(\Delta t)$) du taux de changement ($\Delta V/\Delta t$) de ladite tension de borne (Vch) est inférieur ou égal à un taux de changement de référence prédéterminé (Vref).

2. Dispositif de charge de batterie secondaire selon la revendication 1, comprenant en outre un capteur de température (20) pour détecter la température (Tch) de la batterie secondaire (12) en cours de charge, dans lequel ledit moyen de fin de charge (25) termine la charge lorsque ladite température de batterie détectée (Tch) est supérieure à une température de référence prédéterminée (Tref).

3. Dispositif de charge de batterie secondaire selon la revendication 1, comprenant en outre un capteur de température (20) pour détecter la température (Tch) de la batterie secondaire (12) en cours de charge, et un moyen de détection de taux de changement de température (21) pour détecter le taux de changement ($\Delta T/\Delta t$) de ladite température de batterie détectée (Tch), dans lequel ledit moyen de fin de charge (25) termine la charge lorsque le taux de changement ($\Delta T/\Delta t$) de ladite température de batterie détectée (Tch) est supérieur ou égal à un taux de changement de référence prédéterminé (Tref).

4. Dispositif de charge de batterie secondaire selon l'une quelconque des revendications 1 à 3, dans lequel ledit taux de changement de référence prédéterminé (Vref) est sensiblement égal à zéro.

5. Dispositif de charge de batterie secondaire selon l'une quelconque des revendications 1 à 3, dans lequel ledit taux de changement de référence prédéterminé (Vref) est une valeur juste avant que l'émission d'oxygène de l'anode de la batterie secondaire (12) ne devienne forte.

6. Dispositif de charge de batterie secondaire selon l'une quelconque des revendications 1 à 3, dans lequel ledit taux de changement de référence prédéterminé (Vref) est une valeur au moment auquel la charge de la batterie secondaire (12) correspond à environ 97 % de la pleine charge.

7. Dispositif de charge de batterie secondaire selon l'une quelconque des revendications 1 à 6, dans lequel le rapport de la capacité théorique de l'anode de ladite batterie secondaire (12) sur celle de la cathode est d'environ 1:1,2.

8. Procédé de charge de batterie secondaire adoptant un oxyde de nickel comme matériau d'électrode pour une anode, dans lequel une tension de borne (Vch), un courant de charge (Ich) et une température (Tch) d'une batterie secondaire (12) en cours de charge sont surveillées, et la charge est terminée lorsque le taux de changement ($\Delta(\Delta V)/\Delta(\Delta t)$) du taux de changement ($\Delta V/\Delta t$) de la tension de borne (Vch) est inférieur ou égal à un taux de changement de référence prédéterminé (Vref) et la tension de borne (Vch) est supérieure ou égale à une tension de charge de deuxième moitié (Vcut), qui est une tension de borne proche d'un état de pleine charge théorique de la batterie (12), et calculée sur la base du courant de charge (Ich) et de coefficients concernant au moins un état de dégradation et une température (Tch) de ladite batterie (12).

## Fig. 1

## Fig. 2

# Fig. 3

```
                    ( CHARGE CONTROL )
                              │
            ┌─────────────────────────────────┐
            │  DETECT CHARGING VOLTAGE V ch     ├── S1
            └─────────────────────────────────┘
                              │
            ┌─────────────────────────────────┐
            │  DETECT CHARGING CURRENT I ch     ├── S2
            └─────────────────────────────────┘
                              │
  ┌───────────────────────────────────────────────────┐
  │   Vcut = 1. 4 + ( Ich-1. 6 ) α + ( 2 5 - T ) β + γ │
  │ α : INTERNAL RESISTANCE COEFFICIENT OF BATTERY     │
  │ β : INTETRNAL RESISTANCE TEMPERATURE               ├── S3
  │     DEPENDENCY COEFFICIENT OF BATTERY              │
  │ γ : INTERNAL RESISTANCE DEGRADATION                │
  │     COEFFICIENT OF BATTERY                         │
  └───────────────────────────────────────────────────┘
                              │
   S4 ──< Vch ≧ Vcut ? >── N
              │ Y
            ┌─────────────────────────────────┐
            │      DETECT BATTERY              ├── S5
            │      TEMPERATURE T ch            │
            └─────────────────────────────────┘
                              │
            ┌─────────────────────────────────┐
            │   CALCULATE △ T ch/dt            ├── S6
            └─────────────────────────────────┘
                              │
   S7 ──< △ T ch / dt ≧ T ref ? >── N
              │ Y
            ┌─────────────────────────────────┐
            │   CALCULATE △ V / △ t            ├── S8
            └─────────────────────────────────┘
                              │
            ┌─────────────────────────────────┐
            │ CALCULATE △ ( △ V ) / △ ( △ t )  ├── S9
            └─────────────────────────────────┘
                              │
   S10 ──< △ ( △ V ) / △ ( △ t ) ≦ Vref ? >── N    ┌──────────────┐
              │ Y                                   │  DETECT V ch ├── S11
            ┌─────────────────────────────────┐     └──────────────┘
            │       END CHARGING               ├── S12
            └─────────────────────────────────┘
                              │
                        (  E N D  )
```

$$Vcut = 1.4 + (Ich - 1.6)\alpha + (25 - T)\beta + \gamma$$

Fig. 4

5.3 A

CATHODE
CAPACITY

| 1.0 | 0.2 |

4.5 A

ANODE
CAPACITY

| 1.0 |

Fig. 5

6.1 A

CATHODE
CAPACITY

| 1.0 | 0.6 |

3.7 A

ANODE
CAPACITY

| 1.0 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4503378 A

- JP HEI6315233 B